(19) Europäisches Patentamt
European Patent Office
Office européen des brevets

(11) EP 2 247 675 B1

(12) **EUROPEAN PATENT SPECIFICATION**

(45) Date of publication and mention
of the grant of the patent:
**08.04.2020 Bulletin 2020/15**

(51) Int Cl.:
**C09D 11/02** *(2014.01)*    **C09D 175/04** *(2006.01)*
**B41M 5/52** *(2006.01)*    **B42D 15/00** *(2006.01)*

(21) Application number: **09708804.1**

(22) Date of filing: **05.02.2009**

(86) International application number:
**PCT/GB2009/000322**

(87) International publication number:
**WO 2009/098460 (13.08.2009 Gazette 2009/33)**

(54) **COMPOSITION FOR PRINTING VALUE DOCUMENTS**

ZUSAMMENSETZUNG ZUM DRUCKEN VON WERTSCHRIFTEN

COMPOSITION POUR IMPRESSION DE DOCUMENTS DE VALEUR

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **05.02.2008 GB 0802112**

(43) Date of publication of application:
**10.11.2010 Bulletin 2010/45**

(73) Proprietor: **Sun Chemical B.V.**
**1382 LV Weesp (NL)**

(72) Inventor: **LAWRENCE, Clive, Edward**
**London W5 4XD (GB)**

(74) Representative: **Carpmaels & Ransford LLP**
**One Southampton Row**
**London WC1B 5HA (GB)**

(56) References cited:
**EP-A- 0 805 172       EP-A- 1 338 430
EP-A1- 1 482 014       WO-A-96/28610
WO-A-2005/049744       WO-A-2008/031170
JP-A- 5 287 229        JP-A- 5 302 049
JP-A- 5 302 050        JP-A- 2001 279 151
JP-A- 2003 154 749     JP-A- 2006 231 648**

## Description

The present invention relates to a printing ink or varnish, especially a screen printing ink or varnish, suitable for use on value or security documents, such as bank notes, securities and the like.

All security documents are required to have good stability and durability. However, in the case of bank notes, these requirements are extreme, as bank notes are routinely and unthinkingly abused by the public - they are folded, crushed, crumpled, subjected to abrasion, exposed to weather, exposed to bodily fluids such as perspiration and others even less acceptable, laundered, dry-cleaned, ironed or torn - and, after having been subjected to this, they are expected to be as legible as when they started. Furthermore, it is essential that the documents should have a reasonable life, measured at least in months and ideally years, despite being passed from hand to hand and possibly suffering the above-mentioned abuse. During this time, the documents, and thus the inks on them, should be resistant to fading or colour change, so that, at worst, any such fading or colour change is imperceptible to the average eye. It is, moreover, a prime requirement that the coating composition should be harmless to humans and domestic animals. Hence, any ink or varnish used on them should, when cured, be robust, water-resistant and flexible. Moreover, certain States are moving away from the use of paper as the substrate for bank notes, and so ideally any ink or varnish for such use should be useable on plastics as well as paper.

In addition, all the usual requirements of coating compositions intended for printing still apply - the coating composition should have a viscosity appropriate to the intended printing method, it should have acceptable toxicity, should ideally minimise the use of unsafe materials in the course of manufacture, even if they are not present in the finished product, and it should allow the use of a wide variety of pigments or dyes in order to maximise the possible colours for printing.

Also, it is preferred that the coating composition should be made available to the end user in as simple a form as possible, which, in practice, means in a single pack, with a storage stability measured in months, ideally at least 6 months, still better at least 12 months.

Several attempts have been made to meet these multitudinous and varied requirements. For example, WO 03/020835 describes a water-based screen printing ink composition having (a) an acrylic or urethane-acrylic copolymer emulsion; (b) a cross-linker; (c) optionally a catalyst; (d) optionally pigments; and (e) optionally additives, characterized in that said cross-linker comprises at least two different chemical functionalities within the same molecule, wherein a first of said functionalities is chosen such as to form a covalent link with said polymer prior to printing and a second of said functionalities is selected to effect cross-linking of said polymer to cure the printed ink and that the acrylic or urethane-acrylic copolymer emulsion is selected from the group having self-cross-linking properties.

The unmodified acrylic or urethane-acrylic copolymer emulsions used in WO 03/020835 produce inadequate chemical and hot wash resistance. Reacting via a two step process with bi-functional silanes increases chemical and hot- wash resistance. However, these compositions hydrolyse in aqueous systems with time, losing effectiveness. This may be reduced, but not eliminated, by pH adjustment to near neutrality. The main problem is that the gradual hydrolysis during the 6 month shelf life is invisible and the viscosity of the composition changes very little. This hydrolysis reduces adhesion to substrates and particularly hot wash resistance on polymer banknote type substrates. These prior art compositions also cause a number of high speed rotary screen running problems, including in-line blocking and impaired distribution to the edge of the screen, producing reduced density at the edge. High speed rotary screen presses commonly have a 4-6 metre drying station at 120-160°C and a line speed up to 130m/minutes. Under these conditions, the dwell time is insufficient to dry the print by evaporation. Hence the main drying mechanism is by rapid absorption of the ink into a porous paper like substrate. Where, as with the prior art inks, the polymer properties are such as to prevent adequate penetration, sufficient "drying" may not be achieved, thus leading to the aforementioned problems.

The silanes also can react with pigments in competition with reaction with the polymer: this necessitates pigment pre- treatment, for example with a fluorochemical surfactant. The increase in acid value also reduces base resistance.

Whilst all of the problems mentioned are important, one of the most intractable is to provide hot machine wash resistance. On the one hand, the manufacturers of washing machines and the detergents used in them are constantly researching to provide better and more efficient ways of removing stains, which term would include pigments and varnishes, from clothing, whilst, on the other hand, people constantly leave bank notes in clothing when it is washed. Moreover, in common with many other compositions containing cross-linking agents, these have to be supplied to the end user as 2-component systems, since the composition would otherwise have an unacceptably low pot life.

We have now surprisingly found that the incorporation of a polycarbodiimide into a printing ink or varnish considerably enhances the hot machine wash resistance and wet adhesion of the dried ink or varnish.

Polycarbodiimides are known. They have been used as cross-linking agents in place of isocyanides and polyaziridenes in the automotive and other industries. Their use in road coatings, e.g. paints, is described in US 6,566,437, and other uses are described in US 5,258,481 and 5,047,588. They are used as two pack products with an extended mixed pot-life, usually days and sometimes as much as 3 months. The only single pot systems known were based on organo-silane chemistry. However, it is believed that their use in printing inks and varnishes is new.

Thus, the present invention consists in a printing ink or varnish according to claim 1.

The value documents to which the present invention may be applied include bank notes, passports, gift tokens/vouchers, product authentication certificates, securities certificates etc., as well as any other form of document, whether printed on paper or an a plastics substrate, having similar security requirements to those of bank notes. However, it is thought that the invention will be of greatest value in relation to banknotes.

We believe that the polycarbodiimide will improve the hot machine wash resistance of any printing ink or varnish containing a polymer or resin having free acid or amide groups. However, it is of particular value in and will hereinafter be particularly described with reference to its use in printing inks or varnishes. Whilst the amount of polycarbodiimide may vary over a wide range, there may be certain practical restrictions in any particular case. Thus, too little polycarbodiimide will have too little effect on the hot machine wash resistance, whilst too much will reduce the amounts of other components of the printing ink or varnish and so may adversely affect its other properties. Moreover, large amounts of polycarbodiimide may reduce the shelf life of the composition, and it is one of the surprising advantages of the present invention that relatively low levels of polycarbodiimide may be used to achieve the desired results, whilst retaining a long pot life in a single pack system.

Most commercially available polycarbodiimides contain only about 40% active material. In general, we prefer to use from 0.4 to 1% by weight of the polycarbodiimide (based on the active material - 1 to 2.5% based on the material as supplied) in the printing ink or varnish composition, more preferably from 0.4 to 1.6% by weight of the polycarbodiimide (as active material) in the printing ink or varnish composition.

Examples of commercially available water-dispersible multifunctional polycarbodiimides are described, for example, in US 6121406, US 5929188 and US 6248819, and specific examples include: Poseidon Linker XL-732N, XL-733N, (Quaker Color), Permutex XR-5551, XR-5550 and Carbodelite EO-2, EO-3A, VO2-L2. The preferred multifunctional water dispersible polycarbodiimide for use in the present invention is Carbodelite.

The remaining components of the printing ink or varnish are conventional and are well known to those skilled in the art. Examples of such other components are described in "Printing Ink Manual", fourth edition, Leach R. H. et al. (eds.), Van Nostrand Reinhold, Wokingham, (1988). In general terms, the printing ink or varnish will contain at least a hardenable polymer or resin having free acid or amide groups, a solvent therefor and, in the case of an ink, a colourant, such as a pigment or dye.

The ink or varnish is preferably aqueous-based, and so the polymer or resin is preferably soluble or dispersible in water. Examples of suitable polymers or resins include: polycarbonate polyurethanes and/or polyether or polyester polycarbonate polyurethane copolymers, such as Incorez W835/360, W835/364, W835/256 and W835/140 (ex Industrial Copolymers), U9160vp, U9152VP or U6150VP (ex Albedingk Boley); natural resins, such as polysaccharide resins, arabinogalactans, soybean proteins, acrylics, acrylic copolymers, and hybrid dispersion polymers for example: NeoPac E-160, E-125 or Neocryl XV-12 (ex DSM Chemicals), Incorez W2205, W2605 (ex Industrial Copolymers); APU 10140 VP, UC 84VP (ex Albedingk Boley); and vinyl acrylic resins.

The polymer or resin is preferably a polycarbonate polyurethane and/or a polyether or polyester polycarbonate polyurethane copolymer, and most preferably an aliphatic polycarbonate polyurethane and/or a polyether or polyester polycarbonate polyurethane copolymer. However, other polymers or resins may be employed, provided that they interact with polycarbodiimides. Minor amounts of polymers or resins not interacting with polycarbodiimides may be incorporated in addition, if desired.

The polymer or resin, e.g. polyurethane, used in the present invention is preferably polydisperse, having an average particle size of from 40 to 100 nm, more preferably from 60 to 90nm and most preferably about 80 nm. The overall range of particle sizes is from 10 to 400 nm, more preferably from 20 to 200 nm.

It is particularly surprising that these relatively small particle sizes lead to improved adhesion of the composition to the substrate, since the prior art (see, for example, "Resins for Surface Coatings" (SITA), Vol. 2, p276-p277, which stresses the importance of the particle size being greater than the pore size, to prevent penetration and poor adhesion.

The acid value of the polymer or resin, e.g. polyurethane, is preferably no greater than 10 mg KOH/g, preferably no greater than 9 and more preferably from 3 to 8.

The amount of polymer or resin will typically be from 60 to 88%, more preferably from 60 to 75%, of the printing ink or varnish composition. In general, the polymer or resin will be supplied as a solution or dispersion in a solvent, and so no added solvent will be necessary. The concentration of polymer or resin in these solutions or dispersions is normally from 30 to 50%. The amounts of polymer or resin are given as the amounts of solution or dispersion. If there is no solvent or insufficient solvent, then a solvent should be added. Examples of suitable solvents include 2-(2-butoxyethoxy)ethanol, tripropylene glycol monomethyl ether, N-ethylpyrrolidone and dipropylene glycol monomethyl ether. Preferred solvents should have boiling points greater than 200°C, flash point greater than 90°C and evaporation rates 0.02-0.4, where butyl acetate = 100. The amount of solvent is preferably sufficient to reduce the minimum film-forming temperature of the ink or varnish to a value in the range from 0 to 40°C. In general, the total solvent preferably comprises from 3 to 10, more preferably from 5 to 9%, of the ink or varnish composition. In the case of flat bed printing some of the added cosolvent may be replaced by a humectant at a level from 1 to 5%, to reduce drying on the screen. These humectants maybe based on glycols, polyglycol, polyethers, acid amides, urea or polysaccharides, sugars (e.g. sorbitol), which may be used on their own or in combination. Examples of preferred humectants are Miraplast SCR-47 from Bohner Chemie and diethylene glycol. Glycols like diethylene glycol are capable of lowering the minimum film forming temperature. Humectants, particularly the glycols, may also be added to improve low temperature and freeze/thaw stability.

For certain uses, in particular if the composition is to be printed by rotary screen printing, a defoamer may be incorporated. Preferred defoamers include polysiloxanes, polyether modified polydimethyl siloxane, polyether mixed with polyether siloxane and hydrophobic solids, such as Tego Foamex 805, 810, 812N, 822, 825 and 840 or Byk 011, 019, 024. Where used, the amount of defoamer is preferably from 0.5 to 2.0% of the composition.

Ancillary de-foaming and flow modifying agents may be included, for example:-polyoxyethylenated polyoxypropylene glycol, tertiary acetylenated glycols (e.g. Surfynol 104, 104H, 420 - ex Air products), polyoxyethylenated alcohol ethoxylates (e.g. Tego Wet 500) and silicone polymers (e.g. Tego Wet 270, Coat O Sil MP200). Where used, the amount is preferably in the range from 0.1 to 2%, more preferably from 0.1 to 0.5% by weight of the composition.

It may also be necessary to include a thickener, depending on the intended printing technique. Such thickeners and the amounts thereof are well known to those skilled in the art. However in the case of compositions containing iridescent pigments of large particle size and high density, the thickener or blend must be carefully selected to resist settlement under gravitational stress, while having delayed structural recovery to allow particle alignment after printing. Examples of suitable thickeners include Bentone DE, Reolate 125 ex Elementis, Acrysol RM-8W, Byk 420E, and Byk 425 ex Byk Chemie. It was found that the blend that was most preferred should include modified urea and or polyurethane urea at 0.1 to 0.6 %. These are available as Byk 420E and Byk 425.

In the case of an ink, the composition should include a pigment or dye, which may be chosen from any of those known for use in printing inks. The amount of pigment or dye is preferably from 15 to 19% of the composition for screen printing applications.

For certain types of pigment used in the printing of value documents, especially iridescent pigments used in the present invention, a pigment dispersant is important to minimise settlement and improve re-dispersion. The selected dispersant is preferably an amine neutralised polyacrylate, which is particularly suited because, on drying, amine is lost and film water resistance is not compromised. Other dispersants based on chemistries such as styrene maleic anhydride (e.g. Disperse Ayd W22) may be used.

It is preferred that the pH of the printing ink or varnish composition should be in the range from 8 to 9.5. In order to achieve this, the composition may, if necessary, be neutralised by the addition of a suitable base, preferably a low volatility organic amine, e.g. diethanolamine, diethylamine, triethylamine, morpholine or triethylamine. Triethylamine is an example of a preferred amine for this application, although, for health and safety reasons, its amount may be restricted..

Other conventional additives, such as those identified in "Printing Ink Manual", may also be included in the composition, if desired. It is, of course, well understood that any additives used must not interfere with coating overprint ability, blocking on the reel and sticking on subsequent printing operations.

The compositions of the present invention are suitable for rotary screen printing.

The compositions of the present invention are only able to penetrate the surface of the substrate, and thus adhere to it, if they are of appropriate coating viscosity and if their surface energy is low enough to achieve adequate wetting. This is a precondition for the very fine polyurethane particles penetrating the substrate surface layer. The extent of the penetration is dependent on the surface treatment and the internal substrate structure.. Surface coatings, paper compression and internal binders may reduce penetration, in which case adhesion may be compromised. Alteration of co-solvent, wetting and other dispersion additives may alleviate the problem, as is well known in the art. Polymer based banknote substrates are generally coated with print receptive matt layers, with unprinted areas remaining as clear windows. These coatings are commonly approximately 5-7$\mu$m in thickness with a surface tension of 44mN/m. The compositions of the present invention are capable of wetting and penetrating the surface coated layer, producing good adhesion.

As is well known for the printing of banknotes, the printing ink or varnish should be free from compounds which fluoresce under ultraviolet, should not yellow when heated to 150°C, should meet health and safety criteria (lack of irritancy, toxicity and sensitisation), and should have a flash point greater than 100°C.

The invention is further illustrated by the following non-limiting Examples.

## EXAMPLE 1

The following components were blended together until homogeneous, with no lumps, to form a thickener blend 1 (amounts are parts by weight):

| | |
|---|---|
| Acrysol RM-8W | 45.8 |
| Collacral VAL | 22.9 |

(continued)

| | |
|---|---|
| Byk 425 | 8.3 |
| De-ionized water | 22.9 |

69.9% by weight of Incorez W835/360 (an aliphatic polyester polycarbonate polyurethane) were then charged into a container, and 3.0% by weight of 2-(2-butoxyethoxy)ethanol (a cosolvent) were added and mixed. The following components were then added in the following order, mixing all the time until there were no bits or lumps:

| | | |
|---|---|---|
| Tego Disperse 750W | 4.0% | (Dispersant) |
| Thickener blend 1 | 1.5% | |
| Tego Foamex 805 | 1.6% | (Defoamer) |
| Lustrapak Yellow fine grade | 18.0% | (Security pigment) |
| Carbodelite E-O2 | 2.0% | [multifunctional polycarbodiimide (40% dispersion)]. |

The mixture was immediately filtered twice, each time through a 100 micron filter, after which it was filled into containers, to give a rotary screen ink, acid value 8mg. KOH/g, pH 9, particle size 30-200 nm.

## EXAMPLE 2

Following the procedure described in Example 1, the following components were mixed to form a rotary screen ink, acid value 8mg KOH/g, pH 9.

| | | |
|---|---|---|
| Incorez W835/360 | 52.0% | |
| APU 10140 VP | 16.8% | (Polyurethane dispersion/ Acrylic blend) |
| Tripropylene glycol monomethyl ether | 4.4% | |
| Tego Disperse 750 W | 4.0% | |
| Thickener blend 1 | 1.2% | |
| Tego Fomex 805 | 1.6% | |
| Lustrapak yellow fine grade | 18.0% | |
| Carbodelite E-O2 | 2.0% | |

## EXAMPLE 3

Following the procedure described in Example 1, the following components were mixed to form a rotary screen ink, pH7-8, particle size 0.5-1.5 microns.

| | | |
|---|---|---|
| Ubitol E95435 | 65.1% | (Acrylic self-crosslinking) |
| Aquacer 526 | 8.0% | (Ethylene-vinyl acetate dispersion) |
| Tego Disperse 750W | 5.0% | |
| Tego Foamex 805 | 1.2% | (Defoamer) |
| Thickener blend 2 | 0.7% | (see below) |
| Lustrapak yellow fine grade | 20.0% | |

Thickener blend 2 was prepared by mixing the following components using a similar procedure to that described in Example 1.

| | |
|---|---|
| Acrysol RM-8W | 50% |
| Collacral VAL | 25% |
| De-ionised water | 25% |

## EXAMPLE 4

Following the procedure described in Example 1, the following components were mixed to form a rotary screen ink, acid value 20mg KOH/g, pH 7-8, particle size 50-250 nm.

| | |
|---|---|
| U938 VP | 73.1% (Aliphatic polyester polyurethane dispersion) |
| Tego Disperse 750W | 4.0% |
| Thickener blend 2 | 0.8% |
| Tego Foamex 805 | 1.2% |
| Wetlink 78 | 0.9% (bi-functional organosilane) |
| Lustrapak yellow fine grade | 20.0% |

## EXAMPLE 5

Following the procedure described in Example 1, the following components were mixed to form a rotary screen ink, acid value 20 mg KOH/g, pH 8-9

| | |
|---|---|
| U9800 VP | 64.5% (Aliphatic polyester polyurethane dispersion) |
| 2-(2-Butoxyethoxy)ethanol | 6.0% |
| Tego Disperse 750 W | 4.0% |
| Tego Foamex 805 | 1.4% |
| Thickener blend 2 | 1.2% |
| Lustrapak yellow fine grade | 20.0% |
| Wetlink 78 | 0.9% |
| Carbodelite E-O2 | 2.0% |

## EXAMPLE 6

Following the procedure described in Example 1, the following components were mixed to form a rotary *screen* ink, acid value >25 mg KOH/g, pH 7.5, particle size 0.5-1.5 μm.

| | |
|---|---|
| Neocryl XK 11 | 48.0% [Acrylic (self cross-linking)] |
| De-ionised water | 21.0% |
| 2-Amino-2-methylpropanol | ~ 0.3% |
| Dipropylene glycol monoethyl ether | 6.0% |
| Byk 024 | 1.9% (Defoamer) |
| Byk 025 | 0.1% (Defoamer) |
| Rheolate 276 | 0.6% (Thickener) |
| Jonwax 22 | 3.0% (Particulate wax) |
| Lustrapak yellow fine grade | 18.0% |
| Coat O Sil 1770 | 1.0% (Bifunctional organosilane) |
| Silwet L 7608 | 0.1% (Silicone wetting agent) |

## EXAMPLE 7

Following the procedure described in Example 1, the following components were mixed to form a rotary screen ink, acid value 8mg KOH/g, pH 9, particle size 40-100nm.

| | |
|---|---|
| Incorez W835/360 | 53.3% |
| APU 10140 VP | 16.8% |
| Tripropylene glycol monomethyl ether | 4.4% |
| Tego Disperse 750W | 4.0% |
| Thickener blend 1 | 1.1% |
| Tego Foamex 805 | 1.8% |
| Lustrapak yellow | 18.0% |
| Carbodelite VO2-L2 | 1.6% |

## EXAMPLE 8

Following the procedure described in Example 1, the following components were mixed to form a rotary screen ink, acid value 8mg KOH/g, , pH 9, particle size 40-100nm.

| | |
|---|---|
| Incorez W835/360 | 70.4% |
| Aquacer 526 | 3.0% |
| Tego Disperse 750 W | 4.0% |
| Thickener blend 1 | 1.4% |
| Tego Foamex 805 | 1.4% |
| Lustrapak yellow | 18.0% |
| Carbodelite EO-3A | 2.0% |

## EXAMPLE 9

Following the procedure described in Example 1, the following components were mixed to form a rotary screen ink, acid value 8mg KOH/g, , pH 9, particle size 40-100nm.

| | |
|---|---|
| Incorez W835/360 | 54.6% |
| Incorez W835/256 | 14.6% (Aliphatic polycarbonate polyurethane dispersion) |
| Tego Disperse 750W | 4.0% |
| Tripropylene glycol monomethyl ether | 2.0% |
| Thickener blend 1 | 1.5% |
| Tego Foamex 805 | 1.4% |
| Lustrapak yellow | 20.0% |
| Carbodelite EO-2 | 2.0% |

## EXAMPLE 10

Following the procedure described in Example 1, except that the mixture was filtered twice through 120 $\mu$m filters, the following components were mixed to form a rotary screen ink:

| | |
|---|---|
| Neo Pac E-160 | 64.6 (Acrylic copolymer dispersion) |
| 2-(2-Butoxyethoxy)ethanol | 6.5 |
| Tego Disperse 750W | 4.0 |
| Thickener blend 1 | 1.5 |
| Tego Fomex 805 | 1.4 |
| Lustrapak yellow fine grade | 20.0 |
| Carbodelite E-02 | 2.0. |

The machine parameters were unacceptable and physical and chemical tests were not conducted. Specifically, poor drying was found at high rotary screen line speeds, and in-line mesh blocking was observed and the mesh was difficult to clean.

## MATERIALS

The materials used were obtained as follows:

| | |
|---|---|
| Incorez W835/360 | Industrial Copolymers Ltd. |
| U938 VP | Albedingk Boley. |
| U9160 VP | Albedingk Boley. |
| APU 10140 | Albedingk Boley |
| Neocryl XK11 | NeoResins. |
| Neo Pac E-125 | NeoResins. |

(continued)

| Ubatol E95435 | Cray Valley |
| Coat O Sil MP200 | GE Silicones. |
| Coat O Sil 1770 | GE Silicones |
| Wetlink 78 | GE Silicones. |
| Carbodelite E-O2 , E-O3A, VO-L2. | Nisshinbo Industries. |
| Byk 420,425,024, 025. | Byk Chemie. |
| Aquacer 526 | Byk Chemie. |
| Lustrapak yellow | Merck. |
| Rheolate 276 | Elementis |
| Acrysol RM-8W. | Rohm & Haas |
| Collacral VAL. | BASF |
| Jonwax 22. | BASF |

## TESTS

### Stability Tests

The stability of ink systems were assessed via storage at room temperature and at 40°C. Viscosity measurements were made to monitor thickening and changes in structure. The inks were printed and tested for hot washing machine resistance as a function of storage time. The hot washing machine test is very sensitive to changes due to aging of the ink system. Solvent resistance tests based on number of rubs have been used in the past to assess ageing of ink systems. These measurements were found not to correlate with hot washing tests.

A score of 4 out of 4 on the test represents no removal of the printed security feature and 0 represents complete removal. The test is subject to some variation and is usually repeated on 5 samples and the results averaged out. The structural changes in the inks were assessed using a DIN 4 flow cup at 22°C and a Bohlin CS Rheometer using cup and bob geometry. Storage tests were suspended if the times on the flow cup had increased by more than 5 seconds. Only samples that passed this assessment were hot washing machine tested. It is to be noted that samples settle to varying degree and they must be remixed until homogeneous before viscosity measurement or printing. The results are shown in Table 1.

**Table 1**

| Ink system | Type of curing | Dry abrasion | Wet abrasion | Hot washing | Dry crumple | Wet crumple | Scratch test | Paper destruction<br>X= no of turns | Euro | tropical | extra |
|---|---|---|---|---|---|---|---|---|---|---|---|
| | | | | | | | | | Lifespan y/n | | |
| Free-radical | UV curing 1-pack | 4/4 | 3/4 | 2/4 | 3/4 | 3/4 | 4/4 | $1000 > x > 2000$<br>0      3 | Y | N | N |
| Free-radical | UV curing 2-pack | 4/4 | 3/4 | 3/4 | 3/4 | 3/4 | 4/4 | $2000 > x > 1000$<br>0      2 | Y | Y | Y |
| Free-radical | Aq UV curing 2-pack | 4/4 | 3/4 | 3/4 | 3/4 | 3/4 | 4/4 | $2000 > x > 1000$<br>0      2 | Y | Y | Y |
| Example 1 | Aq pud 1-pack Hot air | 4/4 | 3/4 | 3/4 | 4/4 | 4/4 | 4/4 | $1000 > x > 200$<br>1      3 | Y | Y? | Y |
| Example 2 | Aq pud 1-pack Hot air | 4/4 | 3/4 | 4/4 | 4/4 | 4/4 | 4/4 | $1000 > x > 200$<br>1/2      3 | Y | Y? | Y |
| Example 3 | Aq acd 1-pack Hot air | 4/4 | 3/4 | 0/4 | 3/4 | 3/4 | 4/4 | $1000 > x > 200$<br>0      2 | Y | N | N |
| Example 4 | Aq pud 1-pack Hot air | 4/4 | 3/4 | 2/4 | 3/4 | 3/4 | 4/4 | $1000 > x > 200$<br>0      3 | Y | N | N |
| Example 5 | Aq pud 1-pack Hot air | 4/4 | ¾ | 1/2/4 | ¾ | ¾ | 4/4 | $1000 > x > 200$<br>0      3 | Y | N | N |

(continued)

| Ink system | Type of curing | Dry abrasion | Wet abrasion | Hot washing | Dry crumple | Wet crumple | Scratch test | Paper destruction | | Lifespan y/n | | |
|---|---|---|---|---|---|---|---|---|---|---|---|---|
| | | | | | | | | X= no of turns | | Euro | tropical | extra |
| Example 6 | Aq acd 1-pack Hot air | 4/4 | 3/4 | 2/4 | 3/4 | 3/4 | 4/4 | $1000 > x > 2000$  3 | | Y | N | N |

From these results, it is clear that the compositions containing the polycarbodiimide had better hot wash resistance than did those without (Comparative Examples 3 & 4).

**Chemical Tests.**

Sample prints were prepared by Screen printing (77T mesh), onto a range of banknote type papers. Prints were also produced via coating with a no 3 bar. All the prints were thoroughly hot air dried. The prints were left for 8 hours and tested with solvents applied with cotton buds. The number of low pressure double rubs was recorded. The prints were also cross-hatch tape tested (Tessa tape). The results were recorded on a 0-4 scale, with 4 representing no removal.

Hot washing machine tests were conducted according to E.C.B. specification.

The results are shown in Tables 2 to 6.

**Table 2**

| Ink system | hot machine wash | | | | |
|---|---|---|---|---|---|
| | ECB paper | BDF paper | G+D paper 1 | G+D paper 2 | Securrency |
| Example 1 | 3/4 | 3/4 | 3/4 | 3/4 | 3/4 |
| Example 2 | 4/4 | 4/4 | 4/4 | 3/4 | 3/4 |
| Example 3 | 1/4 | 1/4 | 1/4 | 1/4 | 1/4 |
| Example 4 | 2/4 | 2/4 | 2/4 | 1/4 | 1/4 |
| Example 6 | 3/4 | 2/4 | 2/4 | 2/4 | 2/4 |

**Table 3**

| Ink system | solvent resistance dbl rubs (ipac) | | | | |
|---|---|---|---|---|---|
| | ECB paper | BDF paper | G+D paper 1 | G+D paper 2 | Securrency |
| Example 1 | 100+ | 100+ | 100+ | 100 | 100+ |
| Example 2 | 100+ | 100+ | 100+ | 100 | 100+ |
| Example 3 | <50 | <50 | <50 | <10 | <20 |
| Example 4 | 100 | 100 | 100 | <100 | <100 |
| Example 6 | <100 | <100 | <100 | <100 | <100 |

**Table 4**

| Ink system | solvent resistance dbl rubs (ethanol) | | | | |
|---|---|---|---|---|---|
| | ECB paper | BDF paper | G+D paper 1 | G+D paper 2 | Securrency |
| Example 1 | 100+ | 100+ | 100+ | 100+ | 100+ |
| Example 2 | 100+ | 100+ | 100+ | 100+ | 100+ |
| Example 3 | <50 | <50 | <50 | <20 | <20 |
| Example 4 | 100+ | 100+ | 100+ | 100 | 100 |
| Example 6 | <100 | <100 | <100 | <50 | <50 |

**Table 5**

| Ink system | Cross-hatch tape adhesion | | | | |
|---|---|---|---|---|---|
| | ECB paper | BDF paper | G+D paper 1 | G+D paper 2 | Securrency |
| Example 1 | 4/4 | 4/4 | 4/4 | 2/4 | 4/4 |
| Example 2 | 4/4 | 4/4 | 4/4 | 2/4 | 4/4 |
| Example 3 | 4/4 | 4/4 | 4/4 | 1/4 | 4/4 |
| Example 4 | 4/4 | 4/4 | 4/4 | 1/4 | 4/4 |
| Example 6 | 4/4 | 4/4 | 4/4 | 2/4 | 4/4 |

**Table 6**

| Ink system | Cross-hatch tape adhesion | | | |
|---|---|---|---|---|
| | Rigid pvc | Polycarbonate | Bayfol | Polyester/polycarbonate |
| Example 1 | 4/4 | 4/4 | 4/4 | 4/4 |

**Claims**

1. A printing ink or varnish for screen printing value or security documents, which comprises a multifunctional polycarbodiimide in an amount between 0.4 and 1% by weight (based on active material) of the printing ink or varnish, and which further comprises an iridescent pigment used in the printing of value documents.

2. A water-based printing ink or varnish according to Claim 1.

3. A printing ink or varnish according to Claim 1 or 2, which comprises hardenable polymer or resin, a solvent therefor and, in the case of an ink, a colourant, where the polymer or resin is: a polycarbonate polyurethanes; a polyether or polyester polycarbonate polyurethane copolymer; a natural resin; an acrylic resin, an acrylic copolymer; or a vinyl acrylic resin.

4. A printing ink or varnish according to Claim 3, in which the polymer or resin is a polycarbonate polyurethane and/or a polyether or polyester polycarbonate polyurethane copolymer.

5. A printing ink or varnish according to Claim 4, in which the polyurethane is aliphatic.

6. A printing ink or varnish according to any one of the preceding Claims, in which the polycarbodiimide is a water-dispersible multifunctional polycarbodiimide.

7. A printing ink or varnish according to any one of the preceding Claims in which the ink or varnish is made available to an end user in a single pack with a storage stability measured in months.

8. A process for screen printing a value document, in which the document is printed using a printing ink or varnish according to any one of the preceding Claims.

9. A process according to Claim 8, in which the value document is a banknote.

10. A process according to Claim 8, in which the value document is a passport.

**Patentansprüche**

1. Druckfarbe oder Drucklack zum Siebdrucken von Wert- oder Sicherheitsdokumenten, die bzw. der ein multifunktionelles Polycarbodiimid in einer Menge zwischen 0,4 und 1 Gew.-% (bezogen auf aktives Material) der Druckfarbe oder des Drucklacks umfasst und die bzw. der ferner ein irisierendes Pigment, das beim Drucken von Wertdokumenten verwendet wird, umfasst.

**2.** Wässrige Druckfarbe oder wässriger Drucklack nach Anspruch 1.

**3.** Druckfarbe oder Drucklack nach Anspruch 1 oder 2, die bzw. der härtbares Polymer oder Harz, ein Lösungsmittel dafür und im Fall einer Tinte ein Farbmittel umfasst, wobei es sich bei dem Polymer oder Harz um ein Polycarbonatpolyurethan, ein Polyether- oder Polyester-Polycarbonatpolyurethan-Copolymer, ein Naturharz, ein Acrylharz, ein Acrylcopolymer oder ein Vinyl-Acryl-Harz handelt.

**4.** Druckfarbe oder Drucklack nach Anspruch 3, wobei es sich bei dem Polymer oder Harz um ein Polycarbonatpolyurethan und/oder ein Polyether- oder Polyester-Polycarbonatpolyurethan-Copolymer handelt.

**5.** Druckfarbe oder Drucklack nach Anspruch 4, wobei das Polyurethan aliphatisch ist.

**6.** Druckfarbe oder Drucklack nach einem der vorhergehenden Ansprüche, wobei es sich bei dem Polycarbodiimid um ein wasserdispergierbares multifunktionelles Polycarbodiimid handelt.

**7.** Druckfarbe oder Drucklack nach einem der vorhergehenden Ansprüche, wobei wobei die Farbe oder der Lack einem Endverbraucher in einem einzigen Paket mit einer in Monaten gemessenen Lagerstabilität zur Verfügung gestellt wird.

**8.** Verfahren zum Siebdrucken eines Wertdokuments, wobei das Dokument unter Verwendung einer Druckfarbe oder eines Drucklacks nach einem der vorhergehenden Ansprüche gedruckt wird.

**9.** Verfahren nach Anspruch 8, wobei es sich bei dem Wertdokument um eine Banknote handelt.

**10.** Zusammensetzung nach Anspruch 8, wobei es sich bei dem Wertdokument um einen Pass handelt.

**Revendications**

**1.** Encre ou vernis d'impression pour la sérigraphie de documents de valeur ou de sécurité, qui comprend un polycarbodiimide multifonctionnel en une quantité comprise entre 0,4 et 1 % en poids (sur la base du matériau actif) de l'encre ou du vernis d'impression, et qui comprend en outre un pigment iridescent utilisé dans l'impression de documents de valeur.

**2.** Encre ou vernis d'impression à base d'eau selon la revendication 1.

**3.** Encre ou vernis d'impression selon la revendication 1 ou 2, qui comprend un polymère ou une résine durcissable, un solvant pour celui-ci/celle-ci et, dans le cas d'une encre, un colorant, le polymère ou la résine étant : un polycarbonate polyuréthane ; un copolymère de polyéther ou polyester polycarbonate polyuréthane ; une résine naturelle ; une résine acrylique, un copolymère acrylique ; ou une résine acrylique vinylique.

**4.** Encre ou vernis d'impression selon la revendication 3, dans lequel/laquelle le polymère ou la résine est un polycarbonate polyuréthane et/ou un copolymère de polyéther ou polyester polycarbonate polyuréthane.

**5.** Encre ou vernis d'impression selon la revendication 4, dans lequel/laquelle le polyuréthane est aliphatique.

**6.** Encre ou vernis d'impression selon l'une quelconque des revendications précédentes, dans lequel/laquelle le polycarbodiimide est un polycarbodiimide multifonctionnel dispersable dans l'eau.

**7.** Encre ou vernis d'impression selon l'une quelconque des revendications précédentes, dans lequel/laquelle l'encre ou le vernis est rendu(e) disponible à un utilisateur final dans un emballage unique doté d'une stabilité au stockage mesurée en mois.

**8.** Procédé pour la sérigraphie d'un document de valeur, dans lequel le document est imprimé à l'aide d'une encre ou d'un vernis d'impression selon l'une quelconque des revendications précédentes.

**9.** Procédé selon la revendication 8, dans lequel le document de valeur est un billet de banque.

**10.** Procédé selon la revendication 8, dans lequel le document de valeur est un passeport.

## REFERENCES CITED IN THE DESCRIPTION

**Patent documents cited in the description**

- WO 03020835 A
- US 6566437 B
- US 5258481 A
- US 5047588 A
- US 6121406 A
- US 5929188 A
- US 6248819 B

**Non-patent literature cited in the description**

- Printing Ink Manual. Van Nostrand Reinhold, 1988
- *Resins for Surface Coatings,* vol. 2, 276-277